# EUROPEAN PATENT APPLICATION

(11) **EP 2 680 051 A1**
(43) Date of publication of application: **01.01.2014**
(21) Application number: 13173600.1
(22) Date of filing: 25.06.2013
(51) Int. Cl.: G02B 6/38

(54) **Cable and connector adapter assembly**

(30) Priority: 26.06.2012 US 201213533452
(71) Applicant: General Cable Technologies Corporation, Highland Heights KY 41076 (US)
(72) Inventor: Zajac, Joseph P., Park Ridge, IL 60068 (US)
(74) Representative: Loyer & Abello

(57) **Abstract**

An adapter that comprises an outer housing, an inner shell, a contact insert, and at least one of an optical contact and an electrical contact. The outer housing has opposing first and second ends, and at least the first end has a coupling member. The inner shell has opposing first and second ends and is received in the outer housing. The first end corresponds to the first end of the outer housing. First and second receiving sections are defined in the inner shell and terminate at the first and second ends, respectively. The contact insert is received in the first receiving section of the inner shell. The contact insert has a dielectric body and at least one passageway extending therethrough. The at least one optical contact and electrical contact are received in the at least one passageway of the contact insert.

## Description

### Field of the Invention

The present application relates to a cable and connector adapter assembly. More specifically, the adapter assembly provides for a cable adapter that is connected, at one end, to a cable, such as a fiber optic cable, and at the other, mated with a connector adapter, such as a camera connector.

### Background of the Invention

Conventional fiber optic camera cable systems consist primarily of the fiber optic cable itself, connected directly to an industry-standard camera connector. These cable systems are typically used to broadcast high-definition live television, especially for sporting events such as golf tournaments. With the amount of environmental contamination that can occur at these events, damage to the electrical and optical contacts is a serious problem.

With traditional cable systems, when the camera connector is damaged, the entire assembly, including the cable and connector, must be sent back to the manufacturer for repair. More recently, fusion splicing machines have been developed to allow for on-site replacement of damaged connectors, but these machines are very expensive.

Therefore, a system is needed that allows for immediate on-site replacement of damaged connectors without the need for expensive equipment.

Additionally, current fiber optic cables consist of internal wiring, as well as additional components that provide structural support for the cable. These cables can be expensive and are often heavy, which reduces their mobility in the field. Therefore, a reduced-cost cable, that also reduces overall weight, would be advantageous.

### Summary of the Invention

Accordingly, an exemplary embodiment of the present invention teaches an adapter that comprises an outer housing, an inner shell, a contact insert, and at least one of an optical contact and an electrical contact. The outer housing has opposing first and second ends, and at least the first end has a coupling member. The inner shell has opposing first and second ends and is received in the outer housing. The first end corresponds to the first end of the outer housing. First and second receiving sections are defined in the inner shell and terminate at the first and second ends, respectively. The contact insert is received in the first receiving section of the inner shell. The contact insert has a dielectric body and at least one passageway extending therethrough. The at least one optical contact and electrical contact are received in the at least one passageway of the contact insert.

The present invention also relates to an adapter assembly that comprises a first adapter and a second adapter configured to mate with one another. The first adapter comprises an outer housing, an inner shell, a contact insert, and at least one of an optical contact and an electrical contact. The outer housing has opposing first and second ends, and at least the first end has a coupling member. The inner shell has opposing first and second ends and is received in the outer housing. The first end corresponds to the first end of the outer housing. First and second receiving sections are defined in the inner shell and terminate at the first and second ends, respectively. The second receiving section of the inner shell is configured to receive a mating connector. The contact insert is received in the first receiving section of the inner shell. The contact insert has a dielectric body and at least one passageway extending therethrough. The at least one optical contact and electrical contact are received in the at least one passageway of the contact insert. The second adapter comprises an outer housing, an inner shell, a contact insert, and at least one of an optical contact and an electrical contact. The outer housing has opposing first and second ends, and at least the first end has a coupling member. The inner shell has opposing first and second ends and is received in the outer housing. The first end corresponds to the first end of the outer housing. First and second receiving sections are defined in the inner shell and terminate at the first and second ends, respectively. The second receiving section of the inner shell is configured to receive a cable. The contact insert is received in the first receiving section of the inner shell. The contact insert has a dielectric body and at least one passageway extending therethrough. The at least one optical contact and electrical contact are received in the at least one passageway of the contact insert. The first end of the outer housing of the first adapter is mated with the first end of the outer housing of the second adapter by the coupling members.

Other objects, advantages and salient features of the invention will become apparent from the following detailed description, which, taken in conjunction with the annexed drawings, discloses a preferred embodiment of the present invention.

### Brief Description of the Drawings

A more complete appreciation of the invention and many of the attendant advantages thereof will be readily obtained as the same becomes better understood by reference to the following detailed description when considered in connection with the accompanying drawings, wherein:

FIG. 1 is a cross-sectional view of a cable and connector adapter assembly in accordance with an exemplary embodiment of the present invention, showing a cable adapter and a connector adapter assembled;

FIG. 2A is a cross-sectional view of the connector adapter illustrated in FIG. 1;

FIG. 2B is an exploded elevational view of the connector adapter illustrated in FIG. 2A;

FIG. 3A is a cross-sectional view of the cable adapter illustrated in FIG. 1;

FIG. 3B is an exploded elevational view of the cable adapter illustrated in FIG. 3A; and

FIG. 4 is a cross-sectional view of a cable that couples to the cable adapter in accordance with an exemplary embodiment of the present invention.

### Detailed Description of the Exemplary Embodiments

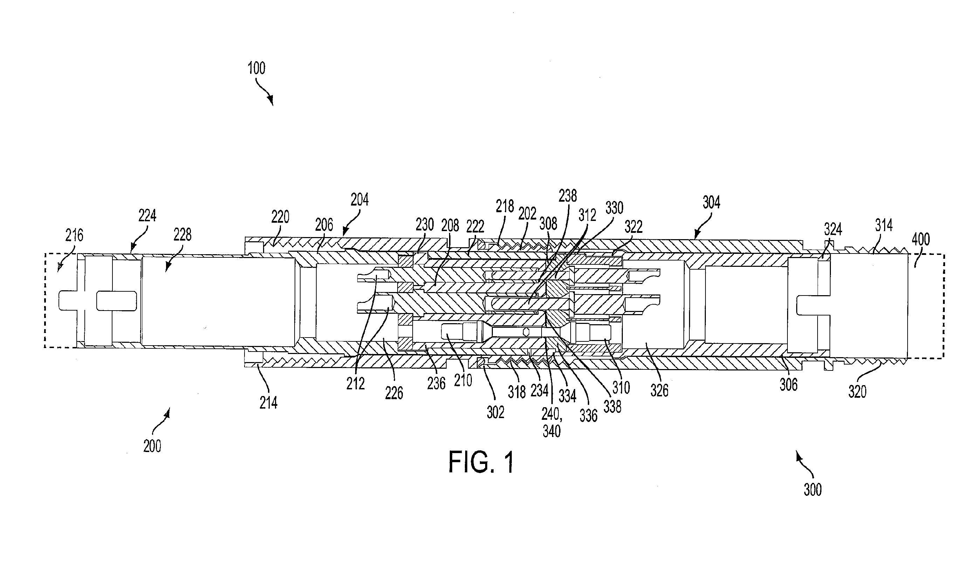

Referring to FIGS. 1, 2A, 2B, 3A, 3B and 4, the adapter assembly 100 of the present invention generally comprises two individual adapters, a connector adapter 200 and a cable adapter 300. The connector adapter 200 may be mated, at one end, with a connector 216, such as an industry-standard camera connector typically known as the LEMO® connector, which is usually part of a cable assembly that connects to the camera itself The cable adapter 300 is preferably used to terminate a cable, such as a fiber optic cable, to a camera connector, that is associated with the camera. Although the adapter assembly 100 is preferably used with an HD camera and its associated fiber optic cable, it will be recognized that the adapter assembly 100 may have other applications, including, for example, use in the telecommunications industry or digital signage. The adapter assembly 100 allows for easy field repair of damaged camera connectors, without the need for fusion splicing or other expensive techniques.

As seen in FIG. 1, the connector adapter 200 and the cable adapter 300 of the adapter assembly 100 are mated at their first ends 202 and 302 of their outer housings 204 and 304 respectively.

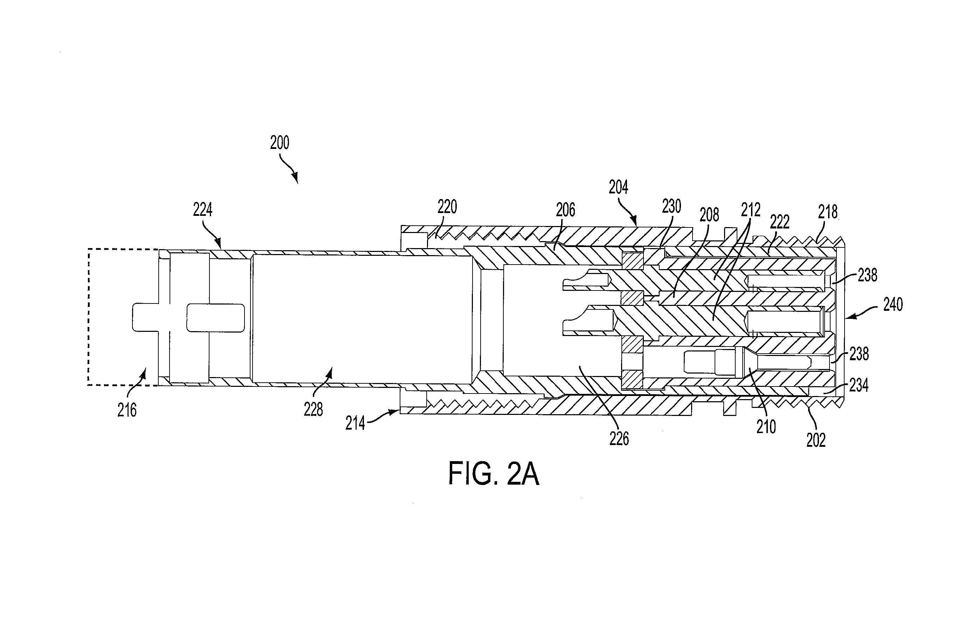

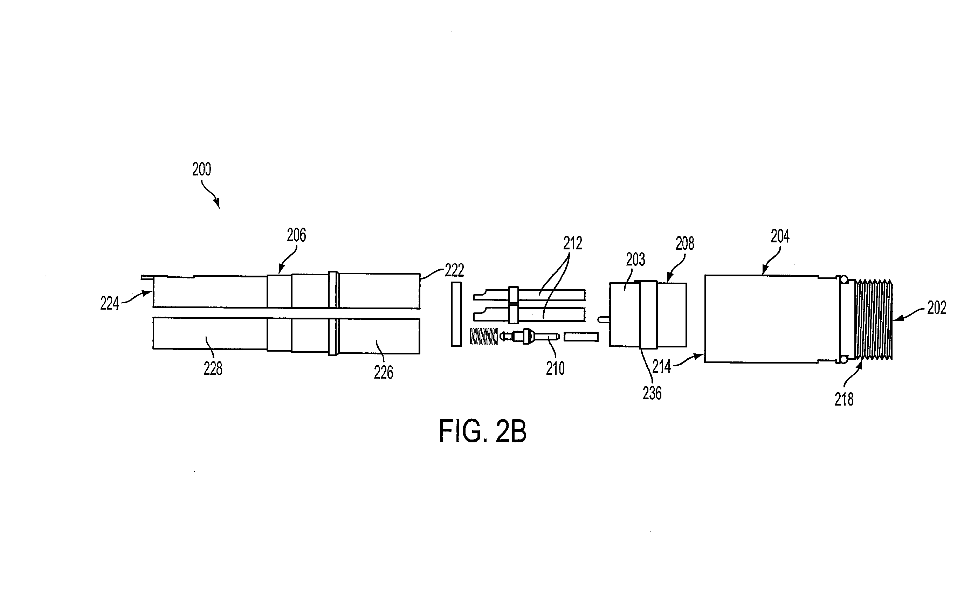

As seen in FIGS. 1, 2A and 2B, the connector adapter 200 generally includes an outer housing 204, an inner shell 206, a contact insert 208, and at least one of an optical contact 210 and an electrical contact 212. The outer housing 204 has first and second opposing ends 202 and 214 for receiving the cable adapter 300 and a mating connector 216, respectively. The mating connector 216 may be a standard LEMO® connector, for example, as is used predominantly in the high-definition television industry. The first end 202 has a coupling member 218, which can be exterior threading. The second end 214 can have a corresponding coupling member 220, which may be interior threading, that allows it to be mated with the camera connector 216.

The inner shell 206 is received in the outer housing 204, and has first and second opposing ends 222 and 224, respectively. The outer housing 204 and inner shell 206 are preferably formed of a metal material. The inner shell 206 holds the internal components of the connector adapter inside the outer housing 204. The first end 222 corresponds to the first end 202 of the outer housing 204. The second end 224 may extend through and beyond the second end 214 of the outer housing 204, as seen in FIG. 2A, and is insertable into the mating connector 216. The inner shell 206 also has first and second receiving sections 226 and 228 which terminate at the first and second ends 222 and 224, respectively. The first receiving section 226 houses the contact insert 208 and the second receiving section 228 engages the mating connector 216. The inner shell may be designed with at least one groove 230 located adjacent to the first end 222 that preferably runs perpendicular to the length of the inner shell 206. The groove 230 helps to hold the contact insert 208 in place inside the inner shell 206. Also, when the connector 216 is threaded into the second end 214, it helps hold the contact inert 208 in place. The manner by which the contact insert is held in place inside the inner shell is not limited to a groove design; any other mechanism known to one skilled the art, including a notch and tab design, can be used.

The first end 222 of the inner shell 206 may also have a notch 234, which extends into the first end 222 of the inner shell 206 perpendicularly, which keys with the cable adapter 300. This notch 234 receives a corresponding tab 334 on the inner shell 306 of the cable adapter 300, as seen in FIG. 1, aiding in alignment ofthe camera and cable adapter 200 and 300, when mated.

The contact insert 208 is preferably housed in the first receiving section 226 of the inner shell 206. The contact insert body is made of a dielectric body 203 that supports and isolates the optical and electrical contacts, 210 and 212 respectively. The contact insert 208 can have an annular ridge 236, which is configured to engage the groove 230 on the inner shell 206 and helps to hold the contact insert 208 in place. Conversely, the contact insert 208 could be designed with a groove, and the inner shell 206 with an annular ridge, such that the ridge would be configured to engage the groove on the contact insert 208. The contact insert 208 has at least one passageway 238, and preferably a plurality of passageways 238, which support the optical and electrical contacts 210 and 212, respectively. The contact insert 208 defines a socket interface 240 which engages the optical and electrical contacts 310 and 312 of the cable adapter 300.

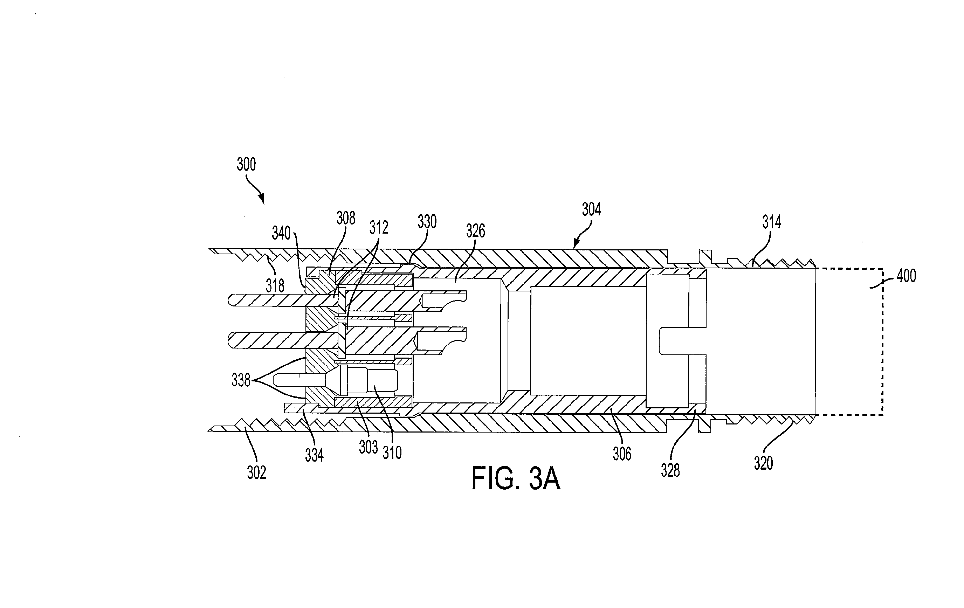

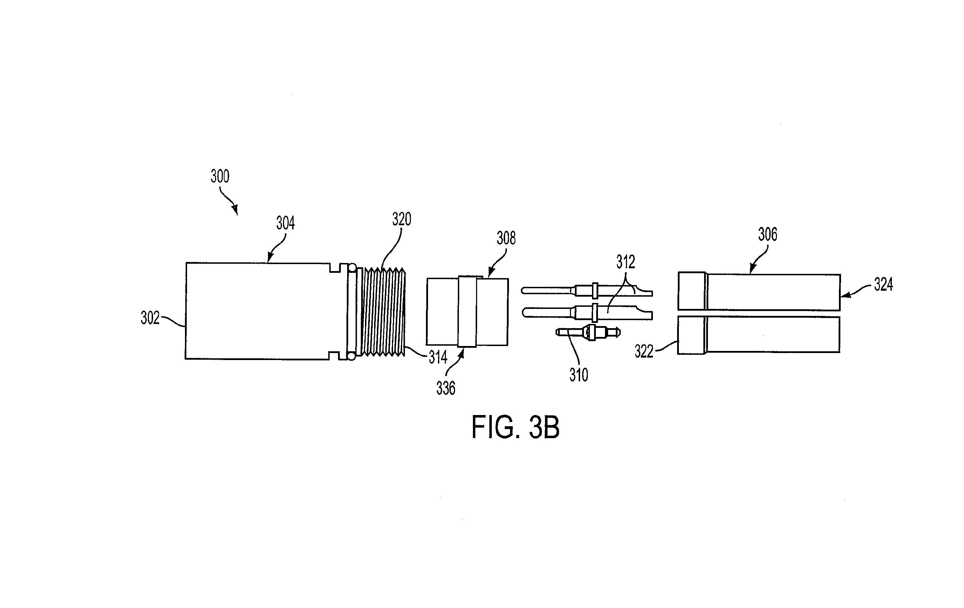

As seen in FIGS. 1, 3A and 3B, the cable adapter 300 is similar to the connector adapter 200, except that it is connected to a cable 400. The cable adapter 300 may include an outer housing 304, an inner shell 306, a contact insert 308, and at least one of an optical contact 310 and an electrical contact 312. The outer housing 304 has a first end 302 for receiving the connector adapter 200, and an opposite second end 314 configured to terminate a fiber optic cable 400. The first end 302 has a coupling member 318, which may be interior threading. The second end 314 can have a coupling member 320, such as exterior threading, which allows it to terminate the cable 400. A strain relief member may be provided that threads onto the second end 314 to clamp down on the cable.

The inner shell 306 is received in the outer housing 304, and has first and second opposing ends 322 and 324, respectively. The outer housing 304 and inner shell 306 are preferably formed of a metal material. The first end 322 corresponds to the first end 302 of the outer housing 304. The ends 322 and 324 slide over contact insert 308 and into outer housing 304. The inner shell 306 also has first and second receiving sections 326 and 328, respectively, which terminate at the first and second ends 322 and 324, respectively. The first receiving section 326 houses the contact insert 308. The inner shell 306 may also be designed with at least one groove 330 or the like located adjacent to the first end 322 that may run perpendicular to the length of the inner shell 306 to help hold the contact insert in place. The manner by which the contact insert 308 is held in place inside the inner shell 306 is not limited to a groove design; any other mechanism known to one skilled the art, including a notch or tab design, can be used.

The tab 334 preferably extends out of the first end 322 of the inner shell 306, as seen in FIG. 3A. Tab 334 is inserted into the corresponding notch 234 on the first end 222 of the inner shell 206 of the connector adapter 200, aiding in alignment of the camera and cable adapters 200 and 300, when mated.

The contact insert 308 has a dielectric body 303, and may have an annular ridge 336, which is configured to engage a corresponding member of the inner shell 306, such as groove 330, to help hold the contact insert 308 in place. Conversely, the contact insert could be designed with a groove, and the inner shell with an annular ridge, such that the ridge would be configured to engage the groove on the contact insert. The contact insert 308 has at least may have one passageway 338, and preferably a plurality of passageways 338, which support the optical and electrical contacts 310 and 312, respectively. The contacts 310 and 312 correspond to the contacts 210 and 212 of the connector adapter 200. The contact insert 308 defines a plug interface 340 which engages the optical and electrical contacts 210 and 212 of the connector adapter 200.

As seen in FIG. 1, the connector adapter 200 and cable adapter 300 mate together to form the adapter assembly 100. When mated, the exterior threading 218 on the outer housing 204 of the connector adapter 200 engages the interior threading 318 on the outer housing 304 of the cable adapter 300 to mate the adapters together. The outer housings 204 and 304 are floating, such that electrical contacts 212 and 312 and the optical contacts 210 and 310 can mate with each other, while the outer housings 204 and 304 are rotated so as to engage the exterior and interior threading 218 and 318. The socket and plug interfaces 240 and 340 of the contact inserts 208 and 308 abut when the electrical contacts 212 and 312 and optical contacts 210 and 310 are fully mated. Specifically, the electrical contacts 312 of the cable adapter 300 are inserted into the electrical contacts 212 of the connector adapter 200. The optical contact 210 of the connector adapter 200 touches and makes contact with the optical contact 310 of the cable adapter. The keying features of the adapters 200 and 300 facilitate proper alignment and mating of the adapters 200 and 300. In particular, the tab 334 of the cable adapter 300 is received in the notch 234 of the connector adapter 200.

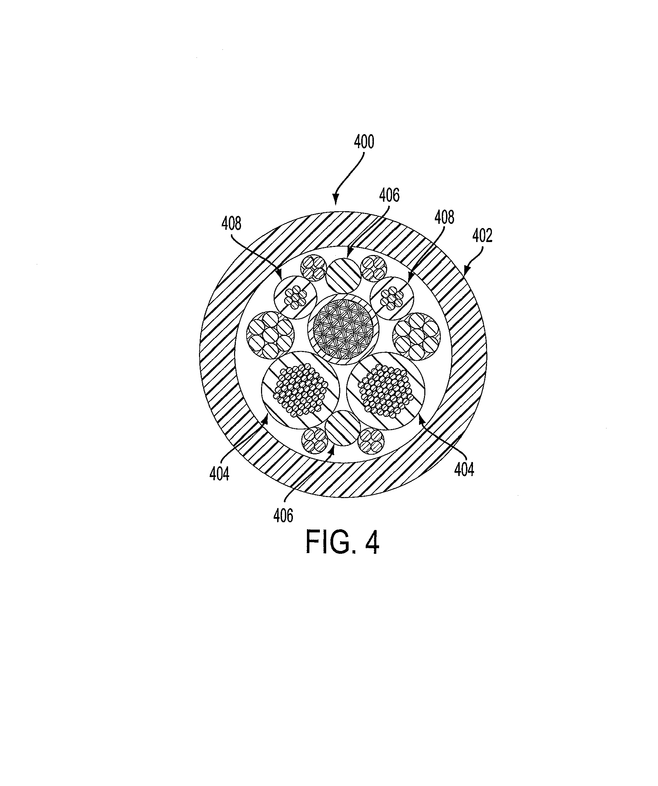

As seen in FIG. 4, the fiber optic cable 400, which terminates at the second end 314 of the outer housing 304 ofthe cable adapter 300, is made of a protective jacket 402 which houses all of the internal components. Within the protective jacket 402 is a plurality of power conductor cables 404, two optical fibers 406, and a plurality of auxiliary conductor cables 408. In traditional fiber optic cables, a steel strength member runs through the length of the cable for support. Second, a braid, which is also incorporated to provide added support, covers the internal wiring of the cable and is placed directly under the jacket 402. In the present invention, the steel strength member and braid have been removed, without jeopardizing the structural integrity of the cable.

While particular embodiments have been chosen to illustrate the invention, it will be understood by those skilled in the art that various changes and modifications can be made therein without departing from the scope ofthe invention as defmed in the appended claims.

## Claims

1. An adapter, comprising:
an outer housing with opposing first and second ends, at least said first end of said outer housing having a coupling member;
an inner shell being received in said outer housing, said inner shell having opposing first and second ends, said first end of said inner shell corresponding to said first end of said outer housing, said inner shell defining first and second receiving sections terminating at said first and second ends, respectively;
a contact insert being received in said first receiving section of said inner shell, said contact insert having a dielectric body with at least one passageway extending therethrough; and
at least one of an optical contact and an electrical contact being received in said at least one passageway of said contact insert.

2. An adapter according to claim 1, wherein
said contact insert has a plurality of passageways, said plurality of passageways individually support optical and electrical contacts.

3. An adapter according to claim 1, wherein
said inner shell has at least one groove, said at least one groove running perpendicular to the length of said inner shell.

4. An adapter according to claim 3, wherein
said contact insert has an annular ridge configured to engage said groove on said inner shell.

5. An adapter according to claim 1, wherein
said coupling member of said outer housing is exterior threads.

6. An adapter according to claim 1, wherein
said inner shell extends through and beyond said second end of said outer housing.

7. An adapter according to claim 1, wherein
said second receiving section of said inner shell is adapted to receive either a mating connector or a cable.

8. An adapter according to claim 1, wherein
said second end of said outer housing is configured to mate with a connector such that said second end of said inner shell is insertable into said connector.

9. An adapter according to claim 1, wherein
said contact insert has a socket interface at said first end of said inner shell.

10. An adapter according to claim 1, wherein
said coupling member of said outer housing is interior threads.

11. An adapter according to claim 1, wherein
said second end of said outer housing and said inner shell are configured to terminate a cable.

12. An adapter according to claim 1, wherein
said contact insert has a plug interface at said first end of said inner shell.

13. An adapter according to claim 1, wherein
said inner shell has one of a notch and tab at said first end of said inner shell.

14. An adapter assembly, comprising:
a first adapter including,
an outer housing with opposing first and second ends, at least said first end of said outer housing having a coupling member,
an inner shell being received in said outer housing, said inner shell having opposing first and second ends, said first end of said inner shell corresponding to said first end of said outer housing, said inner shell defining first and second receiving sections terminating at said first and second ends, respectively,
a contact insert being received in said first receiving end of said inner shell, said contact insert having a dielectric body with at least one passageway extending therethrough, and
at least one of an optical contact and an electrical contact being received in said at least one passageway of said contact insert,
whereby said second receiving section is configured to receive a
mating connector; and
a second adapter configured to mate with said first adapter, said second adapter including,
an outer housing with opposing first and second ends, at least said first end of said outer housing having a coupling member,
an inner shell being received in said outer housing, said inner shell having opposing first and second ends, said first end of said inner shell corresponding to said first end of said outer housing, said inner shell defining first and second receiving sections terminating at said first and second ends, respectively,
a contact insert being received in said first receiving section of said inner shell, said contact insert having a dielectric body with at least one passageway extending therethrough, and
at least one of an optical contact and an electrical contact being received in said at least one passageway of said contact insert,
whereby said second receiving section is configured to receive a
cable,
wherein said first end of said outer housing of said first adapter is mated with said first end of said outer housing of said second adapter by said coupling members.

15. An adapter assembly according to claim 14, wherein
each of said contact inserts of said first and said second adapters has a plurality of passageways, said plurality of passageways individually support optical and electrical contacts.

16. An adapter assembly according to claim 14, wherein
each of said inner shells of said first and said second adapters has at least one groove, said at least one groove running perpendicular to the length of the inner shell.

17. An adapter assembly according to claim 14, wherein
said contact insert of said first adapter has an annular ridge which engages said groove on said inner shell of said first adapter.

18. An adapter assembly according to claim 14, wherein
said contact insert of said second adapter has an annular ridge which engages said groove on said inner shell of said second adapter.

19. An adapter assembly according to claim 14, wherein
said coupling member of said outer housing of said first adapter is exterior threads, and said coupling member of said outer housing of said second adapter is interior threads.

20. An adapter assembly according to claim 14, wherein
said inner shell of said first adapter extends through and beyond said second end of said outer housing for insertion into the mating connector.

21. An adapter assembly according to claim 14, wherein
said first end of said inner shell of said first adapter has a notch and said first end of said inner shell of said second adapter has a tab, wherein said notch receives said tab.

22. An adapter assembly according to claim 14, wherein
said second end of said inner shell of said first adapter is insertable into the mating connector.

23. An adapter assembly according to claim 14, wherein
said second end of said outer housing of said second adapter and said inner shell of said second adapter are configured to terminate the cable.

24. An adapter assembly according to claim 14, wherein
said contact insert of said first adapter has a socket interface, and said contact insert of said second adapter has a plug interface corresponding to said socket interface.

25. An adapter assembly according to claim 14, wherein said second end of said outer housing of said second adapter is configured to terminate said cable, said cable comprising:
a protective jacket;
a plurality of auxiliary conductor cables within said protective jacket;
two optical fibers within said protective jacket; and
a plurality of signal conductor cables within said protective jacket.
